# EUROPÄISCHE PATENTSCHRIFT

(11) **EP 0 717 599 B1**
(45) Veröffentlichungstag und Bekanntmachung des Hinweises auf die Patenterteilung: **26.08.1998**
(21) Anmeldenummer: 94927518.4
(22) Anmeldetag: 31.08.1994
(51) Int. Cl.: A23N 7/04

(54) **VORRICHTUNG ZUM SCHÄLEN VON STANGENFÖRMIGEM GEMÜSE**
DEVICE FOR PEELING ELONGATED VEGETABLES
DISPOSITIF POUR EPLUCHER DES LEGUMES ALLONGES

(30) Priorität: 07.09.1993 DE 4330173
(43) Veröffentlichungstag der Anmeldung: 26.06.1996
(73) Patentinhaber: Sommer, Felix, 79379 Müllheim (DE)
(72) Erfinder: Sommer, Felix, 79379 Müllheim (DE)
(74) Vertreter: Schmitt, Hans, Dipl.-Ing.
(86) Internationale Anmeldenummer: EP9402877
(87) Internationale Veröffentlichungsnummer: WO9507030

(56) Entgegenhaltungen:
- DE-A- 1 757 433
- DE-A- 2 425 932
- DE-C- 219 854
- DE-U- 7 816 311

## Beschreibung

Die Erfindung betrifft eine Vorrichtung zum Schälen von Spargel und dergleichen stangenförmigem Gemüse mit einem Durchtrittskanal zum Durchführen des Gemüsestückes sowie mit wenigstens einem, am Umfang des Gemüsestückes angreifenden und das Gemüsestück federnd druckbeaufschlagenden Schälmesser, welches im Bereich des Durchtrittskanals angeordnet ist und dessen Schneidkante (19) in Schälrichtung (23) wenigstens ein Taster (20, 20') vorgeschaltet ist, der am Umfang des zu schälenden Gemüses anliegt und mit dem Schälmesser im wesentlichen starr verbunden ist, wobei jedes Schälmesser an einem gegen eine Rückstellkraft quer zur Längsrichtung des Durchtrittskanals ausschwenkbar gelagerten Messerarm gegenüber diesem verschwenkbar gehalten ist und im Querschnitt, senkrecht zur Längsrichtung des Durchtrittskanals gesehen, kreissegmentförmig ausgebildet ist.

Das manuelle Schälen beispielweise von Spargel ist mühsam und zeitaufwendig, da jede einzelne Spargelstange in einem aus mehreren Schritten bestehenden Schälvorgang bearbeitet werden muß, bei dem jeweils nur ein streifenförmiger Teil der Außenhaut des Spargels entfernt wird. Nach Abtragen eines Streifens muß der Spargel relativ zum Schälwerkzeug um einen bestimmten Winkel um seine Längsachse gedreht werden, damit der nächste Streifen bearbeitet werden kann. Wird dieser Winkel zu groß gewählt, so entsteht zwischen den beiden Streifen ein Bereich, der vom Schälvorgang nicht erfasst wird.

Dieser Streifen muß dann in einem zusätzlichen Bearbeitungsschritt separat abgetragen werden. Da der geschälte Teil der Spargelaußenhaut von dem ungeschälten nur schwer zu unterscheiden ist, kann es jedoch auch vorkommen, daß die mit dem Schälen befasste Personden zu großen Verdrehwinkel gar nicht bemerkt und deshalb die Spargelhaut nur unvollständig entfernt wird.

Diese Gefahr besteht besonders dann, wenn größere Mengen Spargel geschält werden sollen und die Bearbeitungsperson nach längerer Bearbeitungszeit wegen der monotonen und wenig abwechslungsreichen Arbeit unaufmerksam oder nachlässig wird.

Für unerfahrene Bearbeitungspersonen ist es außerdem schwierig, die Schnittiefe konstant zu halten. In diesem Fall können zwischen den einzelnen Bearbeitungsstreifen Inseln entstehen, in denen die Spargelhaut nicht entfernt wird. Um dies zu vermeiden, ist man im allgemeinen dazu geneigt, die Schnittiefe eher zu groß und/oder den Verdrehwinkel zu klein zu wählen, wodurch unnötig viel Material abgetragen wird.

Die ungleichmäßige Schnittiefe kann durch die Verwendung von bereits bekannten Handgeräten weitgehend ausgeschlossen werden, die über ein schwenkbar gelagertes Messer verfügen, dessen Schneidkante in einem Schneidschlitz angeordnet ist. Diese Handgeräte stellen jedoch nur eine geringe Verbesserung dar, da der Spargel nach wie vor in einem mehrstufigen und langwierigen Arbeitsprozeß stufenweise bearbeitet werden muß.

Da der relativ dünne Spargel beim Schälen nur schwer zu greifen ist und da das scharfe Messer sehr dicht an der den Spargel haltenden Hand vorbeigeführt werden muß, besteht beim manuellen Spargelschälen ein nicht unerhebliches Verletzungsrisiko.

Man hat daher auch bereits eine Schälvorrichtung der eingangs erwähnten Art geschaffen, die einen Durchtrittskanal aufweist, durch den das zu schälende Gemüse mittels einer Vorschubeinrichtung hindurch gefördert werden kann (vgl. DE-U-78 16 311). Im Bereich des Durchtrittskanals sind mehrere, am Umfang des Gemüses angreifende Schälmesser vorgesehen, die paarweise auf einander gegenüberliegenden Seiten des Durchtrittskanals angeordnet sind. Die Schälmesser der vorbekannten Vorrichtung sind am Messerarm gegenüber diesem verschwenkbar gehalten, wobei auch die Messerarme ihrerseits gegen eine Rückstellkraft quer zur Längsrichtung des Durchtrittskanals ausschwenkbar gelagert sind. Während des Schälvorganges wird das zu schälende Gemüsestück somit von den im Querschnitt kreissegmentförmigen Schälmessern federnd druckbeaufschlagt, die mit ihrer geraden Schneidkante beim Vorschub dieses Gemüsestückes die äußere Schale oder Schicht jeweils streifenförmig abschneiden.

Durch die gegen eine Rückstellkraft ausschwenkbar gelagerten Messerarme sowie die gegenüber den Messerarmen ihrerseits verschwenkbaren Schneidmesser können mit Hilfe der vorbekannten Vorrichtung auch solche Gemüsestücke geschält werden, die einen auch über ihre Längserstreckung ungleichmäßigen Querschnitt aufweisen. Jedoch neigen derart verschwenkbar gelagerte Schneidmesser dazu, die Gemüseschalen bereits beim Anschneiden nicht vollständig zu erfassen und das Gemüsestück anschließend nur unvollständig und unbefriedigend zu schälen.

Aus der DE-A-17 57 433 ist bereits eine Schälvorrichtung bekannt, deren Schälmesser starr in den quer zur Längserstreckung des Durchtrittskanals verstellbaren Messerarmen gehalten sind. Durch die starre Befestigung der Schälmesser können diese sich weniger gut an einen unterschiedlichen Querschnittsverlauf des zu schälenden Gemüses anpassen, weshalb bei dieser vorbekannten Vorrichtung die beispielsweise in der Spargelschale vorhandenen Augen vor dem Ineingrifftreten der Schälmesser zunächst abgehobelt werden müssen, was einen zusätzlichen Arbeitsschritt erfordert und auch das Schälergebnis beeinflussen kann.

Es besteht daher insbesondere die Aufgabe, eine Vorrichtung der eingangs erwähnten Art zu schaffen, mit der Spargel und dergleichen stangenförmiges Gemüse schnell und auf einfache Weise praktisch ohne ein Verletzungsrisiko selbst bei manueller Handhabung der Vorrichtung auch in größerem Umfang geschält werden kann, wobei das Gemüse mit möglichst geringem Abfall und weitestgehend ohne am Gemüsestück verbleibende Schalenreste geschält werden soll.

Die erfindungsgemäße Lösung besteht bei der Vorrichtung der eingangs erwähnten Art darin, daß das Schälmesser oder die Schälmesser eine entgegen der der Durchtrittsrichtung konkav gebogene Schneidkante aufweisen.

Da die Schälmesser an den quer zur Längserstreckung des Durchtrittskanals ausschwenkbar gelagerten Messerarmen ihrerseits verschwenkbar gehalten sind, können sich diese gut an die Unebenheiten eines Gemüsestückes anpassen. Weil die Schälmesser entsprechend der Außenkontur des Gemüsestückes geformt sind und dazu einen kreisbogenförmigen Querschnitt haben, kann der gesamte Gemüse-Umfang mit nur wenigen Schälmessern geschält werden. Dabei ist es ein besonderer Vorteil der erfindungsgemäßen Vorrichtung, daß die Schälmesser eine konkave Schneidkante haben, die mit ihrer Kreisbogenform radial in Durchsteck- oder Schieberichtung weist oder orientiert ist; denn durch ihre konkave Schneidkante können die Schälmesser beim Anschneiden des Gemüsestückes besser in dessen Schale eindringen.

Da die erfindungsgemäße Vorrichtung außerhalb des Bereichs des Durchtrittskanals und insbesondere entfernt von den Schälmessern gehalten oder aufgestellt werden kann, ist der Schälvorgang praktisch mit keinem Verletzungsrisiko verbunden. Dieser Schälvorgang läßt sich mittels der erfindungsgemäßen Vorrichtung auf nur eine Tätigkeit, nämlich auf das Durchschieben des Gemüsestückes, reduzieren, wodurch das Gemüse auch in größerem Umfang innerhalb kürzester Zeit geschält werden kann.

Da Gemüse über seine Länge im allgemeinen keinen konstanten Durchmesser aufweist, ist zumindest eines der Messer in Querrichtung des Durchtrittskanals beweglich und wird von einer Druckkraft federnd gegen das Gemüsestück ausgelenkt.

Bei einer bevorzugten Ausführungsform der Erfindung ist die Schwenkachse der Messerarme in Durchsteck- oder Schieberichtung des Gemüsestückes mit Abstand von der Schneidkante angeordnet. Durch die Kraft-Weg-Übersetzung des als Hebel wirkenden Messerarmes kann das Messer in einem relativ großen Bereich in Querrichtung des Durchsteckkanals verstellt werden, ohne daß sich die Andruckkraft des Messers an das Gemüsestück wesentlich verändert. Hierdurch wird erreicht, daß auch in bezug zur Längsmittelachse des Durchtrittskanals außermittig oder schräg eingeführte Gemüsestangen weitgehend fehlerfrei geschält werden. Der Hebel ermöglicht außerdem auf einfache Weise die Realisierung der hier erforderlichen kleinen Messerandruckkräfte.

Ein besonders kompakter Aufbau der Schälvorrichtung ergibt sich, wenn die Vorrichtung mehrere Schälmesser aufweist, von denen zumindest zwei paarweise einander zugeordnete Schälmesser auf gegenüberliegenden Umfangsseitendes Durchtrittkanals angeordnet sind. Werden mehrere solcher Schälmesser bzw. -messerpaare in verschiedenen, senkrecht zur Durchtrittsrichtung liegenden Ebenen angeordnet, kann das Gemüsestück auf seinem gesamten Umfang in einem Arbeitsgang geschält werden. Damit sich die Bedienperson an den Schälmessern nicht verletzen kann, ist es zweckmäßig, wenn das Gehäuse über alle Messerebenen reicht und die Schälmesser nach außen hin über den gesamten Umfang des Durchtrittskanal abdeckt.

Bei einer vorteilhaften Ausführungsform sind die Schälmesser bzw. Messerpaare in gleichmäßigem Abstand über den Umfang des Durchtrittskanals verteilt. Da die erfindungsgemäße Vorrichtung im Bereich des Durchtrittskanals mehrere Schälmesser aufweist, die unterschiedliche Teilbereiche am Umfang des Gemüsestückes bearbeiten, kann ein Gemüsestück auf einfache Weise auch manuell durch den Durchtrittskanal geschoben und gleichzeitig über zumindest einen großen Teilbereich seines Umfanges geschält werden. Sind die Schälmesser dabei in gleichmäßigem Abstand über den Umfang des Durchtrittskanals verteilt, weist das mit der Vorrichtung geschälte Gemüsestück ein gleichmäßiges, weitgehend symmetrisches Schnittbild auf.

Um ein Gemüsestück praktisch in nur einem Durchsteck- oder Schälvorgang schälen zu können, sieht eine bevorzugte Ausführungsform gemäß der Erfindung vor, daß die Vorrichtung vorzugsweise drei, in gleichmäßigen Abständen über den Umfang des Durchtrittskanals verteilte und axial voneinander beabstandete Schälmesser-paare hat. Bei dieser Ausführungsform mit ihren drei Schälmesser-Paaren können die meisten Gemüsearten über den gesamten Umfang und die Längserstreckung des Gemüsestückes vollständig geschält werden, auch wenn das betreffende Gemüsestück nur einmal durch den Durchsteckkanal an den Schälmessern vorbei geschoben wird. Lediglich bei Rettich kann es sich empfehlen, im Bereich des Durchsteckkanales zwei Schälmesser-Paare vorzusehen, wobei der zu schälende Rettich anschließend zweimal, in Umfangsrichtung jeweils versetzter Anordnung durch den Durchsteckkanal der Vorrichtung durchgeschoben werden muß.

Damit die Messerarme getrennt voneinander gegen das zu schälende Gemüsestück angedrückt werden und sich den Unebenheiten dieses Gemüsestückes möglichst gut anpassen können, ist es zweckmäßig, wenn jedem Messerarm zumindest eine Rückstellfeder als Rückstellelement zugeordnet ist und wenn diese Rückstellfedern vorzugsweise als Schenkelfedern ausgebildet sind.

Dabei sieht eine vorteilhafte Ausführungsform gemäß der Erfindung vor, daß die Rückstellfedern in einem Vorrichtungsgehäuse vorzugsweise lösbar gehalten sind und den ihnen zugeordneten Messerarm insbesondere auf der dem Durchtrittskanal abgewandten Seite beaufschlagen. Die lösbare Befestigung der Rückstellfedern in dem Vorrichtungsgehäuse erleichert die Montage und Demontage der erfindungsgemäßen Vorrichtung, auch wenn diese beispielsweise umfassend gereinigt oder repariert werden soll.

Statt solcher Rückstellfedern kann es jedoch auch zweckmäßig sein, wenn die Messerarme gegen die Rückstellkraft wenigstens eines Gummiringes ausschwenkbar sind.

Bei einer Ausführungsform gemäß der Erfindung ist der Gummiring an der Außenseite des Vorrichtungsgehäuses angeordnet, und die Druckkraft des Gummis wird mit Hilfe eines radial zum Durchtrittskanal beweglichen Übertragungsstiftes auf den Messerarm übertragen. Der Gummi und die Übertragungsstifte sind dann von der Außenseite des Gehäuses zugänglich und können zu Reinigungszwecken leicht entfernt werden, ohne daß die Reinigungsperson mit den scharfen Messern in Berührung gerät.

Der Gummiring kann jedoch auch im Inneren des Gehäuses angeordnet sein. In diesem Fall wird der Gummiring vorzugsweise so angeordnet, daß er mehrere, möglichst gleichmäßig über den Umfang des Durchtrittskanals verteilte Messerarme umspannt und an deren Außenseite anliegt. Der Gummiring wird dann von den Messerarmen mit Abstand vom Durchtrittskanal gehalten und kann nicht mit der Spargelstange in Berührung gelangen.

Diese Anordnung des Gummiringes ist besonders dann vorteilhaft, wenn das Gehäuse einen Einsatz aufweist, der die Messerarme trägt. Der Einsatz ist dann zusammen mit den Messerarmen leicht in das Gehäuse einzuführen, wobei die Messerarme vom Gummiring zusammengehalten werden. Bei einem solchen, im Gehäuseinneren an den Messerarmen angreifenden Gummiring, kann auf weitere, außenseitig angeordnete Gummiringe und entsprechende Übertragungsstifte zumindest bei den Schälmessern mit einem vergleichsweise kurzen Messerarm verzichtet werden.

Wenn mehrere Messerebenen vorhanden sind, ist es vorteilhaft, einen Teil der Gummiringe im Gehäuseinneren und die übrigen Gummiringe auf der Außenseite des Gehäuses anzuordnen. Zweckmäßigerweise werden in diesem Fall die Gummiringe für die oberen Messereben im Inneren angeordnet, während die Gummiringe für die unteren Messerebenen auf der Außenseite des Gehäuses angeordnet werden, damit sie nicht in den Bereich des Durchtrittskanals gelangen können.

Eine Weiterbildung gemäß der vorliegenden Erfindung sieht vor, daß das vorzugsweise im wesentlichen zylindrische oder ringförmige Vorrichtungsgehäuse an seinem Außenumfang wenigstens eine Angriffstelle zum Befestigen eines Vorrichtungsständers und/oder eines weiteren Vorrichtungsgehäuses hat. Eine solche Ausgestaltung des Vorrichtungsgehäuses erlaubt es, dieses Gehäuse praktisch modular mit weiteren Vorrichtungen und/oder zumindest einem Vorrichtungsständer zu verbinden. Bei der Zusammenfassung mehrerer Vorrichtungen an den Angriffstellen ihrer Vorrichtungsgehäuse ist es zweckmäßig, wenn diese Vorrichtungen zum Schälen verschiedener Gemüsestücke oder Gemüsearten verschiedene Schälmesser und/oder unterschiedliche Durchmesser in ihrem Durchtrittskanal haben.

Dabei sieht eine besonders einfache und leicht zu handhabende Ausführungsform gemäß der Erfindung vor, daß jedes Vorrichtungsgehäuse mehrere, vorzugsweise drei über den Gehäuseumfang gleichmäßig verteilte Angriffstellen hat und daß jedes Vorrichtungsgehäuse mittels einer formschlüssigen Verbindung, insbesondere mittels einer Nut-Feder-Verbindung, mit wengistens einem weiteren Vorrichtungsgehäuse und/oder einem Vorrichtungsständer lösbar verbindbar ist. Eine solche formschlüssige Verbindung zwischen den einzelnen Vorrichtungsgehäusen erlaubt ein einfaches und leichtes Zusammenfügen und Vereinzeln der betreffenden Vorrichtungen. Beim Zusammenfügen mehrer Vorrichtungen können beispielsweise zwei der drei Angriffstellen der äußeren Vorrichtungsgehäuse zum Verbinden mit benachbarten Vorrichtungen vorgesehen sein, während die dritte Angriffstelle jeweils für ein als Standbein dienenden Vorrichtungsständer verwendet wird. Somit kann auch eine aus mehreren Vorrichtungsgehäusen zuammengefügte Schälvorrichtung standfest aufgestellt werden.

Besonders vorteilhaft ist es, wenn die Messerarme jeweils eine an dem ihnen zugeordneten Schälmesser angreifende Haltegabel aufweisen und wenn die beiden am Schälmesser angreifenden Gabelenden der Haltegabeln zur Entnahme des Schälmessers vorzugsweise elastisch aufweitbar sind. Durch Aufweiten der am Schälmesser angreifenden Gabelenden kann das Schälmesser aus der Haltegabel des ihm zugeordneten Messerarmes entnommen und bei Bedarf gegen ein neues Schälmesser ausgetauscht werden. Da zum Austausch der Schälmesser nur die vorzugsweise elastischen Gabelenden der Haltegabeln aufgeweitet werden müssen, ist zur Demontage der Schälmesser kein zusätzliches Werkzeug erforderlich.

Dabei ist es besonders zweckmäßig, wenn die Messerarme aus Kunststoff hergestellt sind. Solche aus Kunststoff bestehenden Messerarme sind nicht nur kostengünstig herstellbar, vielmehr rosten solche Messerarme nicht und können auch im Bereich ihrer elastischen Haltegabeln zur Entnahme der Schälmesser leicht aufgeweitet werden.

Vorteilhaft ist es, wenn die Schälmesser beidseits Lagerzapfen haben, die in Lager-Ausnehmungen oder dergleichen Lageröffnungen der ihnen zugeordneten Haltegabel eingreifen. Diese Drehlagerung der Schälmesser begünstigt deren leichtgängige Schwingbewegung und erlaubt eine einfache Demontage der Schälmesser aus den Haltegabeln der Messerarme.

Um die Schwenkbewegung der Schälmesser in ihrer Drehlagerung zu begrenzen, sieht eine bevorzugte Ausführungsform gemäß der Erfindung vor, daß die mit Abstand zueinander benachbarten und zur Berührungsfläche zwischen den Lagerzapfen sowie den zugehörigen Lageröffnungen schräg zulaufenden Seiten von Lagerzapfen und Haltegabeln miteinander zusammenwirkende Anschläge und Gegenanschläge zur Begrenzung der Kipp- oder Schwenkbewegungen der Schälmesser bilden.

Die leichtgängige Schwenkbewegung der Schälmesser und deren gute Drehführung wird begünstigt, wenn die Lagerzapfen der Schälmesser und die jeweils eine Lageröffnung begrenzenden Seiten der Haltegabeln im Bereich ihrer gemeinsamen Berührungsfläche abgerundet sind.

Eine Weiterbildung gemäß der Erfindung besteht darin, daß die Schälmesser jeweils mit zumindest einem Zusatztaster im wesentlichen starr verbunden sind, welcher zum Einschwenken des ihm zugeordneten Schälmessers von einer Ruhelage in eine Schneidlage in Durchsteck- oder Schieberichtung mit Abstand von der Schneidkante des entsprechenden Schälmessers angeordnet ist. Die Vorrichtung, die vor allem zum Spargelschälen dient, ist in diesem Fall so konstruiert, daß die Schälmesser, wenn der Spargel noch nicht mit den Zusatztastern in Berührung steht, in eine Ruhelage ausschwenken, bei der die Schneidkanten in Richtung nach außen geschwenkt sind. Da die Schälmesser erst in ihre Schneidlage eingeschwenkt werden, wenn der Spargelkopf die in Durchsteck- oder Schieberichtung mit Abstand von der Schneidkante des Schälmessers nachgeordneten Zusatztaster erreicht hat, wird der empfindliche Spargelkopf in üblicher Weise nicht geschält, sondern nur die dahinterliegende Spargelstange.

Bei einer besonders einfach aufgebauten und insbesondere zum Spargelschälen vorgesehenen Ausführungsform der Erfindung wird das Rückschwenken der Schälmesser von ihrer Schneidlage in eine Ruhelage dadurch erzielt, daß der Schwerpunkt der Schälmesser oberhalb der Messerdrehachse liegt. Die Vorrichtung wird in diesem Fall vorzugsweise so angeordnet, daß die Durchsteckrichtung etwa in Richtung der Schwerkraft liegt.

Bei einer vorteilhaften Ausführungsform der Erfindung sind Rückstellfedern oder dergleichen vorhanden, welche die Schneidkante im Ruhezustand der Messer nach außen schwenken. Eine solche Ausführungsform kann dann in beliebigen Betriebslagen verwendet werden.

Wird der Spargel mit seiner Kopfseite in den Durchtrittskanal eingeschoben, so bewegt sich der Spargelkopf zunächst an den nach außen ausgelenkten Messerschneidkanten vorbei, ohne mit diesen in Berührung zu geraten. Sobald er die Zusatztaster berührt, werden auch die Schälmesser gegen das Gemüse gedrückt. Die den Zusatztastern zugeordneten Messer schwenken somit von der Ruheposition in die Schneidposition und der Schneidvorgang beginnt. Durch die Zusatztaster wird somit erreicht, daß der Schälvorgang erst hinter dem Spargelkopf, also am Spargelhals beginnt und der empfindliche Spargelkopf durch die Messer nicht beschädigt wird.

Soll die erfindungsgemäße Vorrichtung zum Schälen von Karotten, Gurken oder dergleichen stangenförmigem Gemüse verwendet werden, ist es zweckmäßig, wenn die Schälmesser jeweils einen ihrer Schneidkante in Durchsteck- oder Schieberichtung nachgeordneten Schalenabweiser haben, dessen der Schneidkante abgewandter freier Endbereich vorzugsweise schräg nach außen abgewinkelt oder abgebogen ist und dessen gegenüberliegender Teilbereich insbesondere am Schneidmesser außenseitig anliegt und/oder in das Schneidmesser übergeht. Die nach dem Schälen in Durchsteckrichtung hinter der Schneidkante an der Außenseite des Schälmessers entlanggleitenden Gemüseschalen werden vom Schalenabweiser nach außen abgelenkt, so daß sie nicht mehr in den Bereich der in Durchsteckrichtung nachgeschalteten Schälmesser kommen und deren Funktion beeinträchtigen können.

Sofern die Gemüsestücke über ihre gesamte Längserstreckung vollständig geschält werden sollen, ist es zweckmäßig, wenn der Schwerpunkt der Schälmesser unterhalb der Messerdrehachse angeordnet ist. Bei dieser Anordnung des Schälmesser-Schwerpunktes ist praktisch sichergestellt, daß sich die Schälmesser auch in der Ruhelage in ihrer Schneidposition befinden.

Eine bevorzugte Ausführungsform gemäß der Erfindung sieht vor, daß der in Durchsteckrichtung vordere freie Endbereich der Schälmesser-Taster jeweils entgegen der Durchsteckrichtung vorzugsweise trichterförmig nach außen abgewinkelt ist. Insbesondere wenn jedem Messerarm zumindest eine Rückstellfeder als Rückstellelement zugeordnet ist, wird durch diese trichterförmige Ausgestaltung der in Durchsteckrichtung vor den Schneidkanten angeordneten Schälmesser-Taster erreicht, daß die verschiedensten Gemüsestücke auch mit den unterschiedlichsten Durchmessern von den Schälmessern erfaßt und in der erfindungsgemäßen Vorrichtung geschält werden.

Weitere Merkmale der Erfindung ergeben sich aus der folgenden Beschreibung erfindungsgemäßer Ausführungsbeispiele in Verbindung mit den Ansprüchen und der Zeichnung. Die einzelnen Merkmale können je für sich oder zu mehreren bei einer Ausführungsform der Erfindung verwirklicht sein.

Es zeigen in unterschiedlichen Maßstäben und zum Teil stärker schematisiert:
- Fig. 1: eine Schälvorrichtung in einer seitlichen Teil-Schnittdarstellung, welche die beiden oberen Messer der insgesamt auf drei Ebenen verteilten Messerpaare erkennen läßt,
- Fig. 2: eine teilweise im Schnitt gehaltene Teildarstellung der Schälvorrichtung aus Fig. 1 im Bereich des Durchtrittskanals, bei der ein Messerarm in verschiedenen Schwenkpositionen dargestellt ist,
- Fig. 3: eine Frontansicht eines Schälmessers der Schälvorrichtung aus Fig. 1 mit teilweise dargestelltem Messerarm,
- Fig. 4: eine Seitenansicht eines Schälmessers aus Fig. 3 mit teilweise dargestelltem Messerarm,
- Fig. 5: eine teilweise im Schnitt gehaltene Teildarstellung der Schälvorrichtung aus Fig. 1 bis 4 im Bereich des Durchtrittskanals während des Beginns eines Schälvorganges,
- Fig. 6: eine Schälvorrichtung, ähnlich der aus Fig. 1 bis 4, in einer seitlichen Teil-Schnittdarstellung, wobei den Messerarmen der Schälvorrichtung aus Fig. 6 jeweils eine Rückstellfeder als Rückstellelement zugeordnet ist, die den zugehörigen Messerarm im Bereich des Durchtrittskanals der Schälvorrichtung halten,
- Fig. 7: die Schälvorrichtung aus Fig. 6 in einer Draufsicht,
- Fig. 8: die Schälvorrichtung in einer seitlichen Schnittdarstellung, wobei die Schnittdarstellung in Fig. 8 gegenüber derjenigen in Fig. 6 um 90° gedreht ist,
- Fig. 9: einen Messerarm im Bereich der Schwenklagerung seines Schälmessers,
- Fig.10: ein Schälmesser für die Schälvorrichtung aus Fig. 6 in einer Vorderansicht, wobei das Schälmesser einen der Schneidkante in Durchsteckrichtung nachgeordneten Zusatztaster hat und insbesondere zum Spargelschälen vorgesehen ist,
- Fig.11: das Schälmesser aus Fig. 10 in einer Draufsicht,
- Fig.12: das Schälmesser aus Fig. 10 und 11 in einer Seitenansicht,
- Fig.13: das Schälmesser aus Fig. 10 bis 12 in einer seitlichen Schnittdarstellung,
- Fig. 14: ein Schälmesser in einer Vorderansicht, wobei der Schneidkante des Schälmessers in Durchsteckrichtung ein Schalenabweiser nachgeordnet ist,
- Fig.15: das Schälmesser aus Fig. 14 in einer Draufsicht,
- Fig.16: das Schälmesser aus Fig. 14 und 15 in einer Seitenansicht und
- Fig. 17: das Schälmesser aus Fig. 14 bis 16 in einer seitlichen Schnittdarstellung.

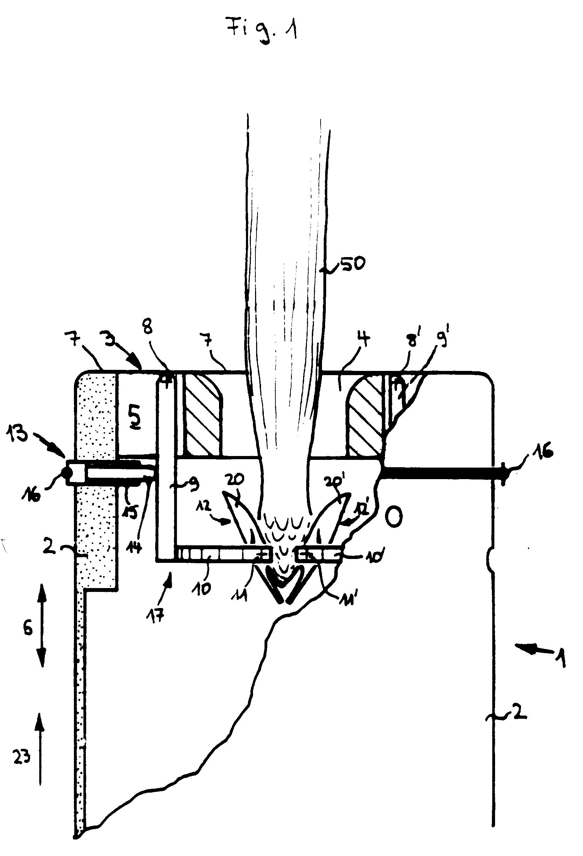

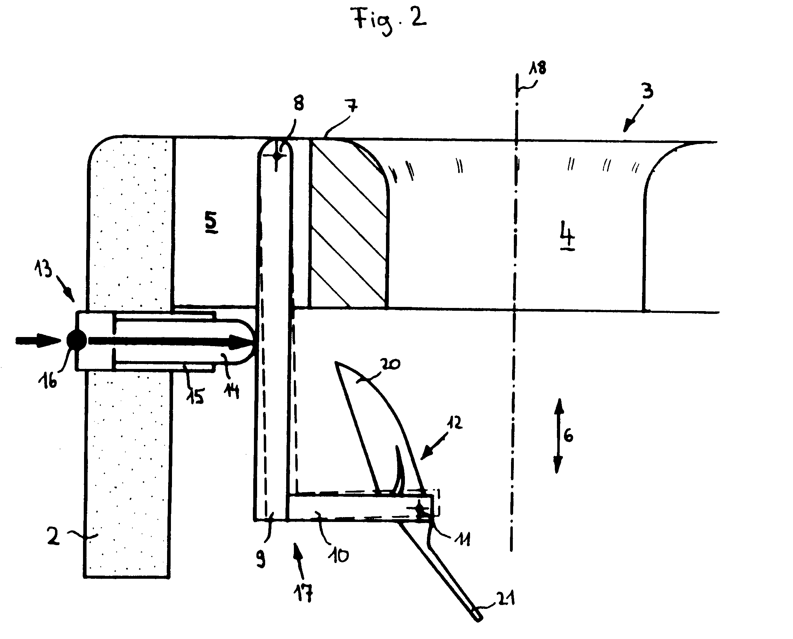

Fig. 1 zeigt eine teilweise im Schnitt gezeichnete Darstellung einer Schälvorrichtung 1, die ein im wesentlichen zylindrisch geformtes Gehäuse 2 aufweist, das einen Einsatz 3 mit einem Durchtrittskanal 4 hat. Der Durchtrittskanal 4 verläuft etwa mittig zur Längsmittelachse des Gehäuses 2 und weist in seinem mittleren und unteren Bereich eine im wesentlichen zylindrische Form auf, die sich in dem oberen Bereich des Durchtrittskanals 4 trichterförmig aufweitet. Der Einsatz 3 hat an seiner Außenseite insgesamt 6 gleichmäßig über den Umfang des Durchtrittskanals 4 verteilte Nuten 5, die in Längsrichtung 6 des Durchtrittskanals 4 verlaufen und die im Querschnitt radial zur Längsmittelachse des Durchtrittskanals 4 angeordnet sind. In jeder der sechs Nuten 5 befindet sich etwa im Bereich der Einsatzoberseite 7 etwa in Höhe der Mitte der jeweiligen Nut 5 je ein Messerarm-Schwenklager 8, in dem je ein in die jeweilige Nut 5 eingreifender, in das Innere des Gehäuses 3 ragender Messerarm 9 schwenkbar gelagert ist. Das freie Ende des Messerarmes 9 trägt eine etwa halbkreisförmige Haltegabel 10. Die Haltegabel 10 ist in ihrer Mitte im Winkel von 90° starr mit dem Messerarm 9 verbunden und weist an ihren beiden Enden je ein Messerschwenklager 11 auf, in dem ein Messer 12 schwenkbar gelagert ist. Etwa in der Mitte des Messerarms 9 greift außerdem ein Übertragungselement 13 an, das bezüglich des Durchtrittskanals 4 in radialer Richtung verschiebbar ist. Das Übertragungselement 13 besteht aus einem Druckstift 14, der zur Verringerung der Reibung an der Außenseite teilweise von einem Gleitmantel 15 umgeben ist. An der Außenseite des Gehäuses 2 weist der Druckstift 14 eine in Umfangsrichtung des Gehäuses 2 verlaufende Nut auf, in die ein in Umfangsrichtung um das Gehäuse 2 umlaufender Gummiring 16 eingelegt ist, der eine in Richtung des Messerarms 9 gerichtete Druckkraft auf den Druckstift 14 ausübt. Die Messerhalterung 17 und das Messer 12 werden dadurch, entsprechend Fig. 2, in Richtung der Längsmittelachse 18 des Durchtrittskanals 4 ausgelenkt.

Der Gummiring 16 greift außerdem an einem weiteren - hier nicht dargestellten - Übertragungselement an, das zu dem ersten Übertragungselement um 180° versetzt am Umfang des Einsatzes 3 angeordnet ist. Dieses wirkt auf einen in die der Nut 5 gegenüberliegende Nut 5' eingreifenden Messerarm 9' ein, der an einem Halteteil 10' ein weiteres Messer 12' trägt, das zu dem Messer 12 um 180° zur Längsmittelachse 18 des Durchtrittskanals 4 verdreht angeordnet ist. Die Schälvorrichtung 1 weist somit ein aus zwei in einer Ebene senkrecht zur Längsmittelachse 18 angeordneten Messern 12, 12' bestehendes Messerpaar auf.

Unterhalb dieser Messerebenen sind im Abstand von jeweils etwa 10 mm zwei weitere Messerebenen mit je einem, gegenüber dem darüberliegenden Messerpaar um 120° zur Längsmittelachse 18 des Durchtrittskanals 4 verdreht angeordneten Messerpaar vorhanden. Insgesamt sind also sechs Messer gleichmäßig über den Umfang des Durchtrittskanals 4 verteilt. Die einzelnen Messerebenen verfügen jeweils über einen eigenen Gummiring 16, so daß die Messer 12, 12' weitgehend unabhängig voneinander ausgelenkt werden können, ohne daß sich dadurch die Andruckkraft der übrigen Messer wesentlich verändert.

Der Einsatz 3 kann zusammen mit den Messern 12, 12' und den Messerhalterungen 17, 17' aus dem Gehäuse entnommen werden, damit das Innere der Schälvorrichtung 1 einfach gereinigt werden kann.

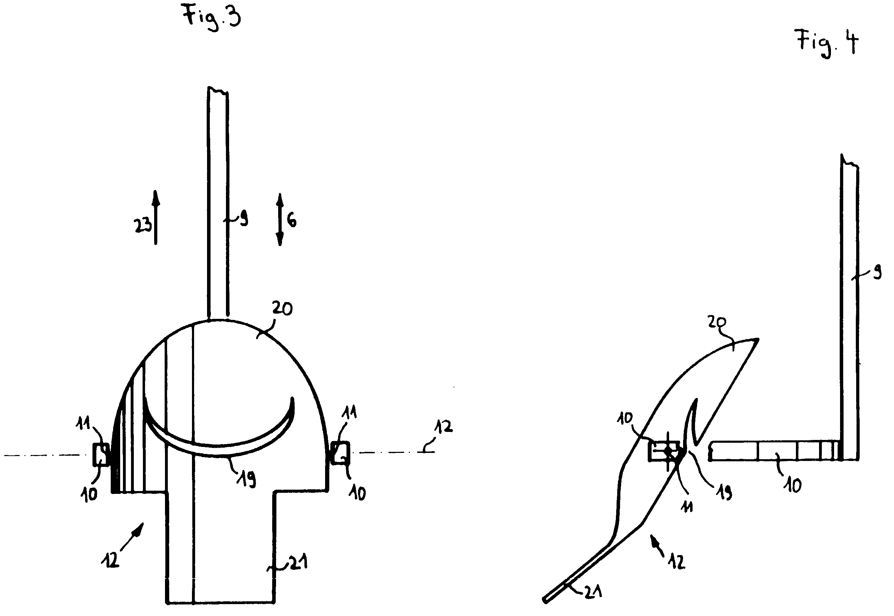

Fig. 3 zeigt eine Frontansicht des Messers 12, die die beiden an den Halteteil 10 angreifenden Schwenklager 11 erkennen läßt, die etwa in Höhe der Schneidkante 19 angeordnet sind.

Das Messer 12 ist in Richtung der Schwenkachse 22 zylindrisch gebogen, wobei der Biegeradius in etwa dem Radius einer sehr großen Spargelstange 50 entspricht. Durch diese Maßnahme können mit der Schälvorrichtung 1 sowohl dünne, als auch dicke Spargelstangen 50 bearbeitet werden, ohne daß die Anzahl oder die Anordnung der Messer 12, 12' verändert werden muß. Die Schneidkante 19 liegt nämlich, bedingt durch die zylindrische Biegung des Messers 12, bei einer dünnen Spargelstange 50 nur in ihrem mittleren Bereich am Umfang des Spargels an, so daß nur ein vergleichsweische schmaler Streifen der Außenhaut geschält wird. Bei dicken Spargelstangen 50 wird dagegen ein wesentlich breiterer Außenhautstreifen 53, 53' von der Schneidkante 19 erfasst, so daß die Spargelstange 50 auch in diesem Fall auf ihrem gesamten Umfang bearbeitet wird.

Die Schneidkante 13 ist außerdem in Längsrichtung 6 des Durchtrittskanals 4 kreissegmentförmig gebogen. Hierdurch wird die Schneidwirkung des Messers 12, besonders beim Anschneiden des Spargels, verbessert.

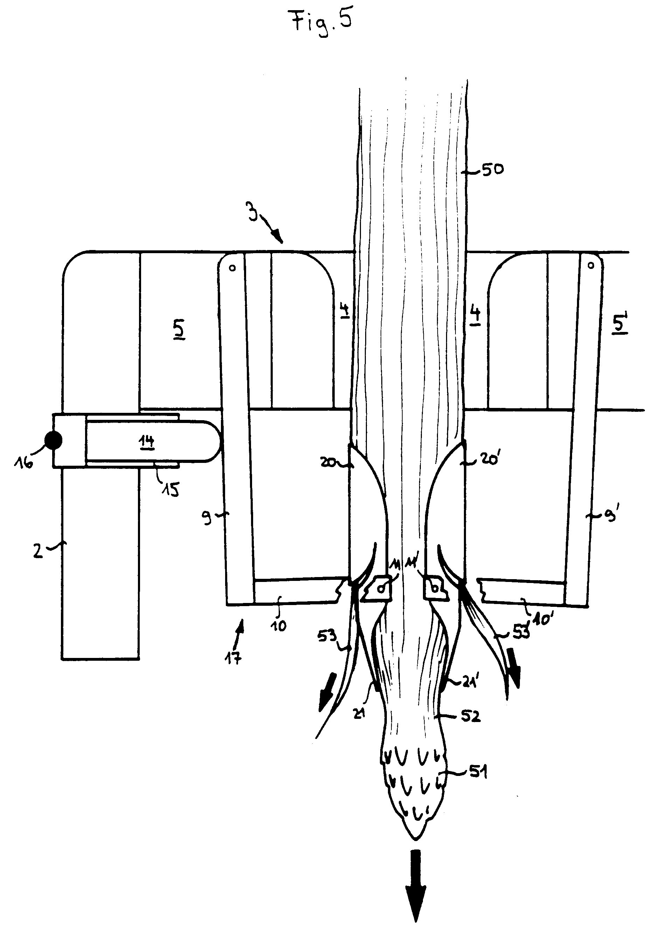

Das Messer 12 hat ferner auf der in Schneidrichtung 23 gelegenen Seite einen Taster 20, der starr mit der Schneidkante 13 verbunden ist. Auf der dem Taster 20 abgewandten Seite des Messers 12 befindet sich außerdem ein Zusatztaster 21, der ebenfalls starr mit der Schneidkante 19 verbunden ist. Fig. 4 zeigt eine Seitenansicht des Messers 12, die den Taster 20 und den Zusatztaster 21 erkennen läßt.

Die Funktionen von Taster 20 und Zusatztaster 21 sollen nachfolgend anhand von Fig. 1 und 5 erläutert werden. Vor dem Einschieben des Spargels 50 in den Durchtrittskanal 4 befinden sich die Messer 12, 12' in ihrer Ruhestellung. in der die Taster 20, 20' aufgrund der Schwerkraft in Richtung der Messerarme 9, 9' ausgelenkt sind. Der Spargel 50 wird nun mit dem Spargelkopf 51 in Längsrichtung 6 in den Durchtrittskanal 4 eingeführt. Dabei gerät der Spargelkopf 51 mit den Zusatztastern 21, 21' in Berührung und lenkt diese nach außen aus (Fig. 1). Die Taster 20, 20' schwenken dadurch nach innen und legen sich etwa in Höhe des Spargelhalses 52 an die Spargelaußenseite an (Fig. 5). Dabei geraten die Schneidkanten 19, 19' mit dem Spargel 50 in Berührung und der Schneidvorgang beginnt. Die Zusatztaster 21, 21' bewirken somit, daß der Schälvorgang erst hinter dem Spargelkopf 51, etwa in Höhe des Spargelhalses 52, beginnt. Der Abstand zwischen dem Schwenklager 11, 11' und der Unterkante des Zusatztasters 21, 21' wird zu diesem Zweck in etwa der Länge des Spargelkopfes 51 angepasst. Der Taster 20, 20' gleitet während des Schneidvorganges an der Außenseite des Spargels 50 entlang und verhindert, daß die Schneidkante 19, 19' zu weit in das Spargelinnere einschwenkt. Die Schneidrichtung der Messer 12, 12' verläuft dadurch tangential zur Außenseite des Spargels 50, so daß eine gleichmäßige Schnittiefe erzielt wird.

Damit die Spargelstangen 50 leicht in den Durchtrittskanal 4 eingeführt und an der gegenüberliegenden Seite der Schälvorrichtung 1 wieder entnommen werden können, wird das Gehäuse 2 der Schälvorrichtung 1 zweckmäßigerweise so an einem Haltearm befestigt, daß die Ober- und Unterseite der Schälvorrichtung 1 frei zugänglich sind. Der Haltearm kann zum Beispiel einen Standfuß zum Abstellen der Vorrichtung aufweisen oder er kann mit einer Klemmvorrichtung zum Beispiel an einer Tischplatte festgeklemmt werden.

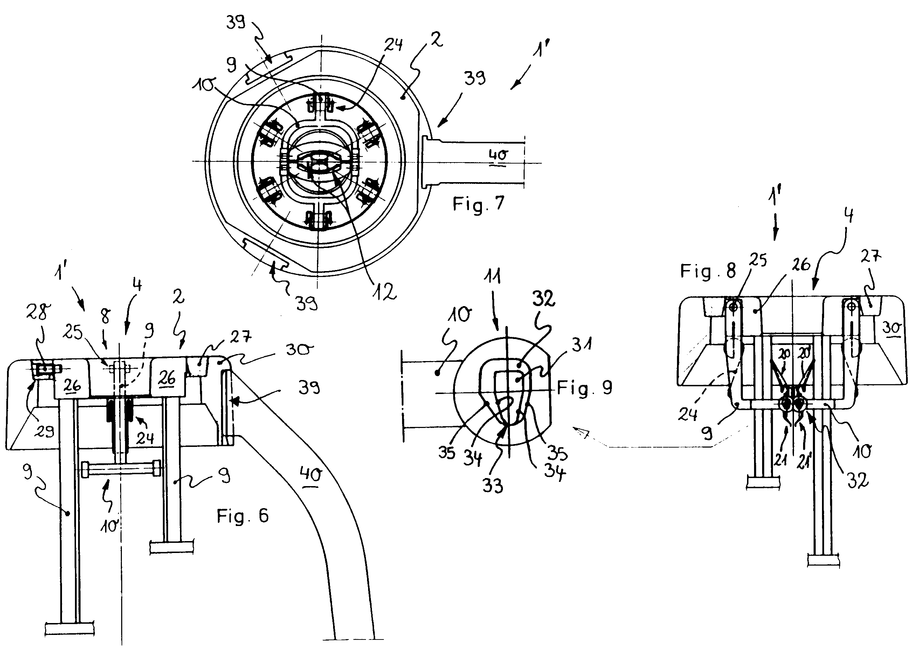

In Fig. 6 ist die bevorzugte Ausführungsform einer Schälvorrichtung 1' dargestellt, die weitgehend der Schälvorrichtung 1 aus den Fig. 1 bis 5 entspricht. Auch die Vorrichtung 1' hat einen Durchtrittskanal 4 zum Durchführen des zu schälenden Gemüsestückes. Im Bereich des Durchtrittskanals 4 der Schälvorrichtung 1' sind mehrere Schälmesser 12 vorgesehen, die am Umfang des Gemüsestückes angreifen. Dabei ist jedem Schälmesser 12 ein Messerarm 9 zugeordnet, der zur Aufnahme des betreffenden Schälmessers 12 eine Haltegabel 10 hat.

Die Messerarme 9 sind jeweils gegen die Rückstellkraft einer Rückstellfeder 24 in dem Vorrichtungsgehäuse 2 der Schälvorrichtung 1' ausschwenkbar gelagert. Die jeweils einem Messerarm zugeordneten Rückstellfedern 24 sind hier als Schenkelfedern ausgebildet, die mit ihren freien Federdrahtenden in Einstecklöchern des Vorrichtungsgehäuses 2 lösbar gehalten sind und den zugehörigen Messerarm 9 auf der dem Durchtrittskanal 4 abgewandten Seite beaufschlagen.

Wie aus Fig. 6 deutlich wird, sind die Messerarme 9 mit ihren Schwenkachsen 25 jeweils in einer Lager-Ausnehmung eines inneren Gehäuseringes 26 drehbar gelagert. In diesen Lager-Ausnehmungen sind die Messerarme durch einen mittleren Gehäusering 27 gesichert, der auf einem Teilbereich des inneren Gehäuseringes aufgeschoben und dort durch Befestigungsschrauben 28 in seiner Lage gehalten ist. Der mittlere Gehäusering 27 liegt auf dem inneren Ringflansch 29 eines äußeren Gehäuseringes 30 auf und kann von dort entgegen der Durchsteckrichtung nach oben entnommen werden.

Die Schwenkachsen 25 der Messerarme 9 sind in Durchsteckrichtung mit Abstand vor den Schälmessern 12 angeordnet.

Von den sechs Schälmessern 12 und zugehörigen Messerarmen 9 der Schälvorrichtung 1' sind jeweils zwei Schälmesser 12 auf gegenüberliegenden Umfangsseiten des Durchtrittskanals 4 einander paarweise zugeordnet, wobei diese Schälmesser-Paare in Längsrichtung des Durchtrittskanals 4 versetzt zueinander angeordnet sind.

Die Schälmesser 12 weisen beidseits Lagerzapfen 31 auf, die jeweils in eine Lageröffnung 32 der ihnen zugeordneten Haltegabel 10 eingreifen. Dabei bilden die mit Abstand zueinander benachbarten und zur Berührungsfläche 33 zwischen den Lagerzapfen 31 sowie den zugehörigen Lageröffnungen 32 schräg zulaufenden Seiten 34 und 35 von Lagerzapfen 31 und Haltegabeln 10 miteinander zusammenwirkende Anschläge und Gegenanschläge zur Begrenzung der Kipp- oder Schwenkbewegungen der Schälmesser 12. Lagerzapfen 31 und Lageröffnungen 32 bilden jeweils ein Messerschwenklager 11. Die in diesen Messerschwenklagern 11 drehbar gelagerten Schälmesser 12 können beim Durchschieben eines Gemüsestückes sich gut an dessen Außenkontur anpassen. Um die Schälmesser 12 während dieser Schwenkbewegungen gleichmäßig führen und drehen zu können, sind die Lagerzapfen 31 der Schälmesser 12 und die jeweils eine Lageröffnung 32 begrenzenden Seiten 35 der Haltegabeln 10 im Bereich ihrer gemeinsamen Berührungsfläche 33 abgerundet, wie insbesondere aus der Detaildarstellung in Fig. 9 deutlich wird.

Die Messerarme 9 sind hier aus Kunststoff hergestellt. Dadurch und durch die Dimensionierung und Ausgestaltung der entsprechenden Haltegabeln 10 sind die beiden an jeweils einem Schälmesser 12 angreifenden Gabelenden zur Entnahme der Schälmesser 12 elastisch aufweitbar, ohne daß ein hoher Aufwand oder ein besonderes Werkzeug erforderlich wäre.

Diese Schälmesser 12 können somit auf einfache Weise demontiert und gegen neue oder andere Schälmesser 12 ausgetauscht werden.

Ein Austausch der Schälmesser kann sich beispielsweise auch dann empfehlen, wenn die Schnittdicke der abgenommenen Schalen verändert werden soll. Der ansich festliegende Abstand zwischen der Schneidkante 19 einerseits und dem gegenüberliegenden freien Endbereich 20 a des Tasters 20 andererseits legt nämlich die Schnittdicke der abgeschälten Schalen fest. Durch das einfache Auswechseln der Schälmesser 12, 12a und/oder 12b gegen solche Schälmesser mit einem anderen radialen Abstand zwischen den Messerteilen 19, 20a kann diese Dicke der Schalen wahlweise verändert werden.

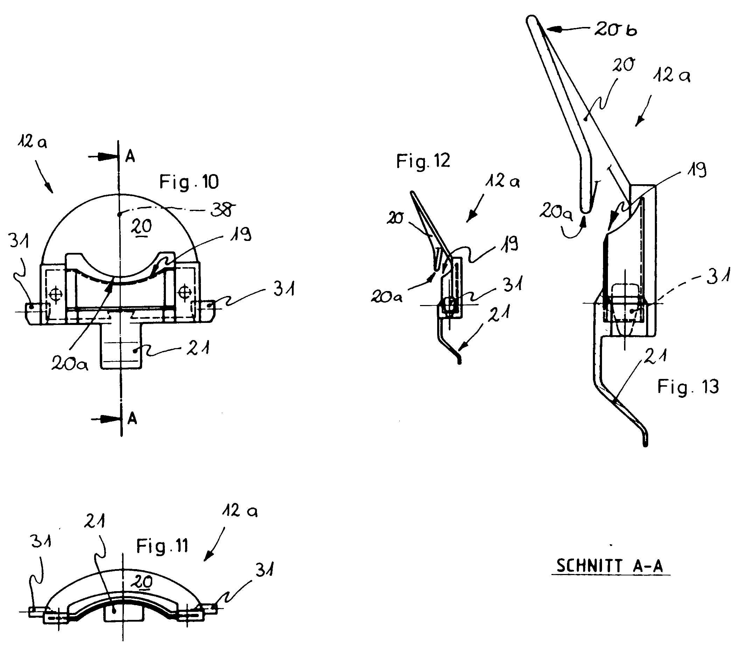

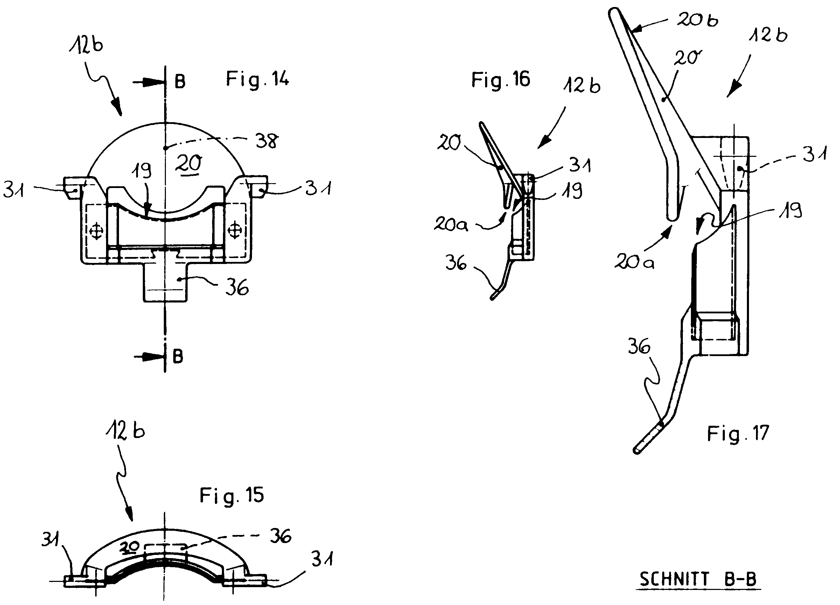

Wie die Figuren 10 bis 13 einerseits und die Figuren 14 bis 17 andererseits zeigen, sind zwei unterschiedliche Schälmesser-Typen für die Schälvorrichtung 1' vorgesehen.

Ähnlich wie in den Figuren 1 bis 5 dient auch das in den Figuren 10 bis 13 gezeigte Schälmesser 12a vor allem zum Schälen von Spargel. Es weist einen Zusatztaster 21 auf, der der Schneidkante 19 in Durchsteckrichtung nachgeordnet ist. Da der Schwerpunkt des Schälmessers 12a gemäß den Figuren 10 bis 13 oberhalb der Messer-Drehachse 11 angeordnet ist, kann das Schälmesser von selbst in seine Ruhelage schwenken, in welcher der Taster 20 nach außen und der Zusatztaster 21 zum Durchsteckkanal 4 weist.

Beim Durchschieben einer Spargelstange durch den Durchsteckkanal 4 der Schälvorrichtung 1' wird das Schälmesser 12a in seine Schneidlage bewegt, wenn der empfindliche Spargelkopf den Zusatztaster 21 berührt. Da dabei der Spargelkopf bereits an der Schneidkante 19 vorbeigeschoben ist, wird in üblicher Weise nicht der Spargelkopf, sondern nur die Spargelstange geschält.

Das in den Figuren 14 bis 17 dargestellte Schälmesser 12b ist demgegenüber für solche Gemüsestücke vorgesehen, die über ihre gesamte Längserstreckung geschält werden sollen. Statt eines Zusatztasters 21 ist bei dem Schälmesser 12 b gemäß den Figuren 14 bis 17 ein Schalenabweiser 36 vorgesehen, welcher der Schneidkante 19 in Durchsteckrichtung nachgeordnet ist.

Während der dem Schneidmesser 12b zugewandte Teilbereich des Schalenabweisers 36 am Schneidmesser außenseitig anliegt, ist dessen gegenüberliegender freier Endbereich 37 schräg nach außen abgewinkelt. Die von der Schneidkante 19 abgeschälten Gemüseschalen gleiten somit über den Schalenabweiser 36 nach außen, wo sie nicht mehr in den Bereich benachbarter und in Durchsteckrichtung nachgeschalteter Schälmesser 12b gelangen und deren Funktion beeinträchtigen können.

Da der Schwerpunkt des Schälmessers 12b unterhalb der Messer-Drehachse 11 angeordnet ist, werden die Schälmesser 12b auch in ihrer Ruhelage in der in Figuren 16 und 17 dargestellten Schneidposition gehalten. Aus einem Vergleich der Figuren 10 bis 13 und der Figuren 14 bis 17 andererseits wird deutlich, daß der Lagerzapfen 31 des Schälmessers 12b im Bereich des Tasters 20 und der Lagerzapfen 31 in Durchsteckrichtung mit Abstand hinter der Schneidkante 19 angeordnet ist.

Auch die im Querschnitt ebenfalls konvex gebogenen Schneidmesser 12a und 12b sind jeweils an den einander benachbarten Seiten der Schneidkante 19 und des Tasters 20 kreisbogenförmig ausgebildet. Da dabei die Kreisbogenform der Schneidkante 19 im Vergleich zu den Tastern 20 in Längsrichtung einen größeren und im Querschnitt einen kleineren Radius hat, nimmt der Abstand zwischen den einander benachbarten Seiten der Schneidmesser 12a, 12b und der Taster 20 etwa von deren Längsmittelachse 38 aus beidseits nach außen zu. In ihrem äußeren Randbereich verlaufen die einander benachbarten Seiten der Schneidmesser 12a, 12b sowie der zugeordneten Taster 20 mit Abstand etwa parallel zur jeweiligen Schneidmesser-Schwenkachse. Durch diese Ausgestaltung der Schälmesser 12a, 12b werden die Gemüseschalen von den Schälmessern leicht erfasst und während des Schälvorganges gut geführt, ohne daß sich diese Gemüseschalen beidseits an den äußeren Randbereichen zwischen den Schälmessern und den Tastern 20 festsetzen könnten.

In den Figuren 13 und 17 ist gut zu erkennen, daß der freie Endbereich 20b der Schälmesser-Taster 20 entgegen der Durchsteckrichtung vorzugsweise trichterförmig nach außen abgewinkelt ist. Durch diese trichterförmige Ausgestaltung der Schälmesser-Taster 20 werden die in den Durchsteckkanal der Vorrichtung 1' eingeschobenen Gemüsestücke von den Schälmessern auch dann noch erfaßt, wenn diese Gemüsestücke jeweils sehr unterschiedliche Durchmesser aufweisen. Diese automatische Einstellung der Vorrichtung 1' auf die eventuell artbedingten unterschiedlichen Durchmesser des Schälgutes wird noch durch die als Rückstellelemente dienenden Rückstellfedern 24 begünstigt, welche die Messerarme sowie die daran gehaltenen Schälmesser vor jedem Schälvorgang in eine Außgangslage zurückbewegen, die einem vergleichweisen kleinen Durchmesser des Schälgutes entspricht. Auch in dieser Ausgangslage werden durch die trichterförmige Ausgestaltung der Schälmesser-Taster 20 auch größere Gemüsestücke, wie beispielsweise Gurken, von den Schälmessern 12 erfaßt, wobei sich die Messerarme 9 während des Schälvorganges entgegen der Rückstellkraft der Rückstellfedern 24 an die Dicke und die Oberflächen-Unebenheiten des betreffenden Gemüsestückes anpassen.

Wie aus den Figuren 6 und 7 deutlich wird, weist die Schälvorrichtung 1' an dem Außenumfang ihres Vorrichtungsgehäuses 2 drei, über den Gehäuseumfang gleichmäßig verteilt angeordnete Angriffsstellen 39 auf, die zum Verbinden dieses Vorrichtungsgehäuses 2 mit einem weiteren Vorrichtungsgehäuse 2 einer anderen Schälvorrichtung 1' oder - wie hier - mit einem Vorrichtungsständer 40 dienen. Das Vorrichtungsgehäuse 2 der Schälvorrichtung 1' kann somit an den Angriffstellen 39 mittels einer Nut-Feder-Verbindung mit zumindest einem weiteren Vorrichtungsgehäuse verbunden werden, welches beispielsweise zum Schälen anderer Gemüsestücke unterschiedliche Schälmesser 12, 12a, 12b oder einen größeren oder kleineren Durchtrittskanal aufweist. Die Vorrichtungsgehäuse 2 der Schälvorrichtungen 1' können somit praktisch modular zu einer größeren Schälvorrichtung zusammengesetzt werden.

Auch mit Hilfe der Schälvorrichtung 1' kann Spargel oder anderes stangenförmiges Gemüse schnell und auf einfache Weise praktisch ohne ein Verletzungsrisiko auch manuell in größerem Umfang geschält werden.

## Patentansprüche

1. Vorrichtung zum Schälen von Spargel und dergleichen stangenförmigem Gemüse mit einem Durchtrittskanal (4) zum Durchführen des Gemüsestückes sowie mit wenigstens einem, am Umfang des Gemüsestückes angreifenden und das Gemüsestück federnd druckbeaufschlagenden Schälmesser (12, 12a, 12b), welches im Bereich des Durchtrittskanals (4) angeordnet ist und dessen Schneidkante (19) in Schälrichtung wenigstens ein Taster (20, 20') vorgeschaltet ist, der (20, 20') am Umfang des zu schälenden Gemüses anliegt und mit dem Schälmesser (12, 12a, 12b) im wesentlichen starr verbunden ist, wobei jedes Schälmesser (12, 12a, 12b) an einem gegen eine Rückstellkraft quer zur Längsrichtung des Durchtrittskanals (4) ausschwenkbar gelagerten Messerarm (9, 9') gegenüber diesem (9, 9') verschwenkbar gehalten ist und im Querschnitt, senkrecht zur Längsrichtung des Durchtrittskanals gesehen, kreissegmentförmig ausgebildet ist, **dadurch gekennzeichnet,** daß das Schälmesser oder die Schälmesser (12, 12a, 12b) eine entgegen der Durchtrittsrichtung konkav gebogene Schneidkante (19) haben.

2. Vorrichtung nach Anspruch 1, dadurch gekennzeichnet, daß die Schwenkachse (8, 8') der Messerarme (9, 9') in Durchsteck- oder Schieberichtung (6) des Gemüsestückes mit Abstand vor der Schneidkante (19, 19') des Schälmessers (12, 12a, 12b) angeordnet ist.

3. Vorrichtung nach Anspruch 1 oder 2, dadurch gekennzeichnet, daß die Vorrichtung (1) mehrere Schälmesser (12, 12a, 12b) aufweist, von denen zumindest zwei paarweise einander zugeordnete Schälmesser etwa auf gegenüberliegenden Umfangsseiten des Durchtrittskanals (4) angeordnet sind.

4. Vorrichtung nach einem der Ansprüche 1 bis 3, dadurch gekennzeichnet, daß die Vorrichtung (1) mehrere Schälmesser (12, 12a, 12b) oder Schälmesser-Paare hat, die in Längsrichtung (6) des Durchtrittskanals (4) versetzt zueinander angeordnet sind.

5. Vorrichtung nach einem der Ansprüche 1 bis 4, dadurch gekennzeichnet, daß mehrere Schälmesser (12, 12a, 12b) oder Schälmesser-Paare vorhanden sind, die in gleichmäßigen Abständen über den Umfang des Durchtrittskanals (4) verteilt sind.

6. Vorrichtung nach einem der Ansprüche 1 bis 5, dadurch gekennzeichnet, daß jedem Messerarm (9) zumindest eine Rückstellfeder (24) als Rückstellelement zugeordnet ist und daß diese Rückstellfedern (24) vorzugsweise als Schenkelfedern ausgebildet sind.

7. Vorrichtung nach einem der Ansprüche 1 bis 6, dadurch gekennzeichnet, daß die Rückstellfedern (24) in einem Vorrichtungsgehäuse (2) vorzugsweise lösbar gehalten sind und den ihnen zugeordneten Messerarm (9) insbesondere auf der dem Durchtrittskanal (4) abgewandten Seite beaufschlagen.

8. Vorrichtung nach einem der Ansprüche 1 bis 7, dadurch gekennzeichnet, daß die Messerarme (9, 9') gegen die Rückstellkraft wenigstens eines Gummiringes (16) ausschwenkbar sind.

9. Vorrichtung nach einem der Ansprüche 1 bis 8, dadurch gekennzeichnet, daß jedem Schälmesser-Paar zumindest ein Gummiring (16) zugeordnet ist.

10. Vorrichtung nach einem der Ansprüche 1 bis 9, dadurch gekennzeichnet, daß der Gummiring (16) oder die Gummiringe (16) am Außenumfang des Vorrichtungsgehäuses (2) angeordnet sind, und daß an jedem Messerarm (9, 9') ein von zumindest einem Gummiring (16) druckbeaufschlagter Übertragungsstift (13) anliegt, der im Vorrichtungsgehäuse (2) in etwa radialer Richtung zum Durchtrittskanal (4) verschiebbar geführt ist.

11. Vorrichtung nach einem der Ansprüche 1 bis 10, dadurch gekennzeichnet, daß die Messerarme (9, 9') im Vorrichtungsgehäuse (2) schwenkbar gelagert sind, daß der Gummiring (16) oder die Gummiringe (16) am Außenumfang des Vorrichtungsgehäuses (2) angeordnet sind, und daß an jedem Messerarm (9, 9') ein von zumindest einem Gummiring (16) druckbeaufschlagter Übertragungsstift (13) anliegt, der im Vorrichtungsgehäuse (2) in etwa radialer Richtung zum Durchtrittskanal (4) verschiebbar geführt ist.

12. Vorrichtung nach einem der Ansprüche 1 bis 11, dadurch gekennzeichnet, daß das vorzugsweise im wesentlichen zylindrische oder ringförmige Vorrichtungsgehäuse (2) an seinem Außenumfang wenigstens eine Angriffstelle (39) zum Befestigen eines Vorrichtungsständers (40) und/oder eines weiteren Vorrichtungsgehäuses (2) hat.

13. Vorrichtung nach einem der Ansprüche 1 bis 12, dadurch gekennzeichnet, daß jedes Vorrichtungsgehäuse (2) mehrere, vorzugsweise drei, über den Gehäuseumfang gleichmäßig verteilte Angriffstellen (39) hat und daß jedes Vorrichtungsgehäuse (2) mittels einer formschlüssigen Verbindung, insbesondere mittels einer Nut-Feder-Verbindung, mit wenigstens einem weiteren Vorrichtungsgehäuse (2) und/oder einem Vorrichtungsständer (40) lösbar verbindbar ist.

14. Vorrichtung nach einem der Ansprüche 1 bis 13, dadurch gekennzeichnet, daß die Messerarme (9) jeweils eine an dem ihnen zugeordneten Schälmesser (12, 12a, 12b) angreifende Haltegabel (10) aufweisen und daß die beiden am Schälmesser (12, 12a, 12b) angreifenden Gabelenden der Haltegabeln (10) zur Entnahme des Schälmessers (12, 12a, 12b) vorzugsweise elastisch aufweitbar sind.

15. Vorrichtung nach einem der Ansprüche 1 bis 14, dadurch gekennzeichnet, daß die Messerarme (9) aus Kunststoff hergestellt sind.

16. Vorrichtung nach einem der Ansprüche 1 bis 15, dadurch gekennzeichnet, daß die Schälmesser (12, 12a, 12b) beidseits Lagerzapfen (31) haben, die in Lager-Ausnehmungen oder dergleichen Lageröffnungen (32) der ihnen zugeordneten Haltegabel (10) eingreifen.

17. Vorrichtung nach einem der Ansprüche 1 bis 16, dadurch gekennzeichnet, daß die mit Abstand zueinander benachbarten und zur Berührungsfläche (33) zwischen den Lagerzapfen (31) und den zugehörigen Lageröffnungen (32) schräg zulaufenden Seiten (34, 35) von Lagerzapfen (31) und Haltegabeln (10) miteinander zusammenwirkende Anschläge und Gegenanschläge zur Begrenzung der Kipp- oder Schwenkbewegungen der Schälmesser (12a, 12b) bilden.

18. Vorrichtung nach einem der Ansprüche 1 bis 17, dadurch gekennzeichnet, daß die Lagerzapfen (31) der Schälmesser (12a, 12b) und die jeweils eine Lageröffnung (32) begrenzenden Seiten (35) der Haltegabeln (10) im Bereich ihrer gemeinsamen Berührungsfläche (33) abgerundet sind.

19. Vorrichtung nach einem der Ansprüche 1 bis 18, dadurch gekennzeichnet, daß die Schälmesser (12, 12') jeweils mit zumindest einem Zusatztaster (21, 21') im wesentlichen starr verbunden sind, welcher zum Einschwenken des ihm zugeordneten Schälmessers (12, 12') von einer Ruhelage in eine Schneidlage in Durchsteck- oder Schieberichtung (6) mit Abstand von der Schneidkante (19, 19') des entsprechenden Schälmessers (12, 12') angeordnet ist.

20. Vorrichtung nach einem der Ansprüche 1 bis 19, dadurch gekennzeichnet, daß der Schwerpunkt der Schälmesser (12, 12a) oberhalb der Messerdrehachse (11) angeordnet ist.

21. Vorrichtung nach einem der Ansprüche 1 bis 20, dadurch gekennzeichnet, daß jedem Schälmesser wenigstens eine Rückstellfeder oder dergleichen zugeordnet ist, die das Schälmesser mit seiner Schneidkante im Ruhezustand nach außen ausschwenkt.

22. Vorrichtung nach einem der Ansprüche 1 bis 21, dadurch gekennzeichnet, daß die Schälmesser (12b) jeweils einen ihrer Schneidkante (19) in Durchsteck- oder Schieberichtung nachgeordneten Schalenabweiser (36) haben, dessen der Schneidkante (19) abgewandter freier Endbereich (37) schräg nach außen abgewinkelt oder abgebogen ist und dessen gegenüberliegender Teilbereich vorzugsweise am Schneidmesser (12b) außenseitig anliegt und/oder in das Schneidmesser (12b) übergeht.

23. Vorrichtung nach einem der vorstehenden Ansprüche, dadurch gekennzeichnet, daß der Schwerpunkt der Schälmesser (12b) unterhalb der Messerdrehachse (11) angeordnet ist.

24. Vorrichtung nach einem der Ansprüche 1 bis 23, dadurch gekennzeichnet, daß der Abstand zwischen den einander benachbarten und zumindest im Bereich der Schneidkante (19) vorzugsweise jeweils kreisbogenförmigen Seiten der Schneidmesser (12a, 12b) und ihrer Taster (20) etwa von deren Längsmittelachse (38) aus beidseits nach außen zunimmt und daß dazu insbesondere die Kreisbogenform der Schneidmesser (12a, 12b) im Vergleich zu den Tastern (20) einen größeren Radius hat.

25. Vorrichtung nach einem der Ansprüche 1 bis 24, dadurch gekennzeichnet, daß die einander benachbarten Seiten der Schneidmesser (12a, 12b) und zugeordneten Taster (20) in ihrem äußeren Randbereich mit Abstand vorzgusweise parallel zur jeweiligen Schneidmesser-Schwenkachse verlaufen.

26. Vorrichtung nach einem der Ansprüche 1 bis 25, dadurch gekennzeichnet, daß die mit den Schälmessern (12, 12a, 12b) starr verbundenen Taster (20) sowie gegebenenfalls auch die Zusatztaster (21) einen etwa kreissegmentförmig oder konvex gebogenen Querschnitt aufweisen.

27. Vorrichtung nach einem der Ansprüche 1 bis 26, dadurch gekennzeichnet, daß die Vorrichtung (1,1') vorzugsweise drei, in gleichmäßigen Abständen über den Umfang des Durchtrittskanals (4) verteilte und axial voneinander beabstandete Schälmesser-Paare (12, 12a, 12b) hat.

28. Vorrichtung nach einem der Ansprüche 1 bis 27, dadurch gekennzeichnet, daß der freie Endbereich (20b) der Schälmesser-Taster (20) jeweils entgegen der Durchsteckrichtungvorzugsweise trichterförmig nach außen abgewinkelt ist.

## Claims

1. A device for peeling asparagus and similar stick-shaped vegetables with a throughput channel (4) to allow a vegetable to be passed through and at least one peeling blade (12, 12a, 12b) acting upon the circumference of the vegetable and exerting a pressure on the vegetable in a sprung manner, which is disposed in the region of the throughput channel (4), and wherein at least one tactile part (20, 20') is attached in front of its cutting edge (19) in the direction of cutting, this tactile part (20, 20') lying against the circumference of the vegetable which is to be peeled and being substantially rigidly connected to the peeling blade (12, 12a, 12b), wherein each peeling blade (12, 12a, 12b) is mounted on a knife am (9, 9') which can be swung out against an elastic force transversely to the throughput channel (4), this knife arm (9, 9') being mounted in a swivellable manner, and which is circular in cross-section when viewed perpendicular to the longitudinal direction of the throughput channel, characterised in that the peeling blade or blades (12, 12a, 12b) have a cutting edge (19) which is curved concavely against the throughput direction.

2. An apparatus according to claim 1, characterized in that the pivoting axis (8, 8') of the knife arms (9, 9') is arranged at a distance in front of the cutting edge (19, 19') of the peeling blade (12, 12a, 12b) in the throughput or pushing direction (6) of the vegetable.

3. An apparatus according to claim 1 or 2, characterized in that the apparatus (1) has a plurality of peeling blades (12, 12a, 12b), of which at least two blades, arranged opposite one another as a pair, are disposed on opposite circumferential sides of the throughput channel (4).

4. An apparatus according to one of claims 1 to 3, characterised in that the apparatus (1) has a plurality of peeling blades (12, 12a, 12b) or pairs of peeling blades, which are disposed offset with regard to each other in the longitudinal direction (6) of the throughput channel (4).

5. An apparatus according to one of claims 1 to 4, characterised in that a plurality of peeling blades (12, 12a, 12b) or pairs of peeling blades are present, distributed at equal distances around the circumference of the throughput channel (4).

6. An apparatus according to one of claims 1 to 5, characterised in that at least one return spring (24) is assigned to each knife arm (9) as a returning element, and that these return springs (24) are preferably designed as spring clips.

7. An apparatus according to one of claims 1 to 6, characterised in that the return springs (24) are advantageously held in a releasable manner in an apparatus housing (2) and act on their allocated knife arm (9) especially on the side facing away from the throughput channel (4).

8. An apparatus according to one of claims 1 to 7, characterised in that the knife arms (9, 9') can be swivelled out against the elastic force of at least one rubber ring (16).

9. An apparatus according to one of claims 1 to 8, characterised in that at least one rubber ring (16) is allocated to each pair of peeling blades.

10. An apparatus according to one of claims 1 to 9, characterized in that the rubber ring or rings (16) is or are disposed on the outer circumference of the apparatus housing (2) and that a transmission pin (13), having force applied to it by at least one rubber ring (16), is present at each knife am (9, 9') and is movably guided in the apparatus housing (2) in approximately a radial direction with regards to the throughput channel (4).

11. An apparatus according to one of claims 1 to 10, characterized in that the knife arms (9, 9') are swivellably mounted in the apparatus housing (2), that the rubber ring or rings (16) is or are disposed on the outer circumference of the apparatus housing (2), and that a transmission pin (13), having force applied to it by at least one rubber ring (16) is present at each knife arm (9, 9') and is movably guided in the apparatus housing (2) in approximately a radial direction with regards to the throughput channel (4).

12. An apparatus according to one of claims 1 to 11, characterised in that the preferably substantially cylindrical or ring-shaped apparatus housing (2) has at least one point of application (39) on its outer circumference for attachment of an apparatus stand (40) and/or a further apparatus housing (2).

13. An apparatus according to one of claims 1 to 12, characterised in that each apparatus housing (2) has a plurality of, preferably three, points of application (39), distributed equally about the circumference of the housing (2) and that each apparatus housing (2) by means of an interlocking connection, especially a groove and spring connection, can be connected in a releasable manner to at least one further apparatus housing (2) and/or an apparatus stand (40).

14. An apparatus according to one of claims 1 to 13, characterised in that the knife arms (9) have a holding fork (10) which acts on their allocated peeling blades (12, 12a, 12b), and that the two fork ends of the holding fork (10) which act upon the peeling blades (12, 12a, 12b) are preferably elastically expandable for removal of the peeling blade (12, 12a, 12b).

15. An apparatus according to one of claims 1 to 14, characterized in that the knife arms (9) are manufactured from plastic.

16. An apparatus according to one of claims 1 to 15, characterised in that the peeling blades (12, 12a, 12b) have supporting lugs (31) on both sides which act upon support recesses or similar support openings (32) in their allocated holding fork.

17. An apparatus according to one of claims 1 to 16, characterised in that the obliquely-tapering sides (34, 35) of the supporting lugs (31) and holding forks (10), adjacent, at a distance, to one another and to the contact surface (33) between the supporting lugs (31) and their support openings (32), form detents and counter-detents, which work in conjunction with one another to limit the tipping or swinging movements of the peeling blades (12a, 12b).

18. An apparatus according to one of claims 1 to 17, characterised in that the supporting lugs (31) of the peeling blades (12a, 12b) and the sides (35) of the holding forks (10) which respectively limit one supporting opening (32) are rounded off in the area of their common contact surface (33).

19. An apparatus according to one of claims 1 to 18, characterised in that the peeling blades (12, 12') are substantially rigidly connected to at least one additional tactile part (21, 21'), which is arranged at a distance from the cutting edge (19, 19') of the respective peeling blade (12, 12') for swivelling its allocated peeling blade (12, 12') from a position of rest to a cutting position in the throughput direction (6).

20. An apparatus according to one of claims 1 to 19, characterised in that the centre of gravity of the peeling blade (12, 12') is above the knife's axis of rotation (11).

21. An apparatus according to one of claims 1 to 20, characterised in that each peeling blade is allocated at least one reset spring or similar, which swings the peeling blade into a rest position with its cutting edge facing outwards.

22. An apparatus according to one of claims 1 to 21, characterised in that the peeling blades (12b) have a peeler guard (36) mounted after their cutting edge (19) in the throughput direction, whose free end facing away from the cutting edge (19) is angled or bent outwards and whose opposite partial area is preferably on the outside of the cutting blade (12b) and/or goes into the cutting blade (12b).

23. An apparatus according to one of the aforementioned claims, characterized in that the centre of gravity of the peeling blades (12b) is disposed below the rotational axis of the knife (11).

24. An apparatus according to one of claims 1 to 23, characterized in that the distance between the adjacent, and at least in the area of the cutting edge (19), preferably respectively circular sides of the cutting blades (12a, 12b), and their tactile parts (20) increases outwards on both sides from approximately the central longitudinal axis (38), and that especially the segmental arch shape of the cutting blades (12a, 12b) has a larger radius than the tactile parts (20).

25. An apparatus according to one of claims 1 to 24, characterised in that the adjacent sides of the cutting blades (12a, 12b) and allocated tactile parts (20) preferably run parallel, at a distance, in their edge area to the respective cutting blade rotational axis.

26. An apparatus according to one of claims 1 to 25, characterised in that the tactile parts (20) which are rigidly connected to the peeling blades (12, 12a, 12b), and, if necessary, also the additional tactile parts (21) have an approximately circular or convex-curved cross-section.

27. An apparatus according to one of claims 1 to 26, characterised in that the apparatus (1, 1') has preferably three pairs of peeling blades (12, 12a, 12b), distributed at equal intervals about the circumference of the throughput channel (4) and disposed axially at a distance from one another.

28. An apparatus according to one of claims 1 to 27, characterised in that the free end area (20b) of the peeling blade tactile part (20) is angled outwards, preferably in a funnel shape, against the throughput direction.

## Revendications

1. Dispositif de pelage des asperges et légumes en forme de tige analogues, avec un canal de passage (4) destiné à faire passer la pièce de légume ainsi qu'au moins une lame de pelage (12, 12a, 12b) agissant sur la périphérie de la pièce de légume et sollicitant de façon élastique la pièce de légume, lame de pelage qui est disposée dans la zone du canal de passage (4) et dont l'arête de découpage (19), dans la direction de pelage, est précédée d'au moins un palpeur (20, 20'), le palpeur (20, 20') appuyant sur la périphérie du légume à peler et étant relié de façon sensiblement rigide à la lame de pelage (12, 12a, 12b), chaque lame de pelage (12, 12a, 12b) étant maintenue de façon pivotante sur un bras porte-lame (9, 9') monté de façon à pouvoir s'échapper par pivotement, à l'encontre d'une force de rappel, transversalement par rapport à la direction du canal de passage (4), par rapport au bras porte-lame (9, 9') et étant réalisé avec une forme en segment de cercle si l'on observe en coupe transversale, perpendiculairement par rapport à la direction longitudinale du canal de passage, caractérisé en ce que la lame de pelage ou les lames de pelage (12, 12a, 12b) ont une arête de coupe (19) dotée d'une incurvation concave, opposée à la direction de passage.

2. Dispositif selon la revendication 1, caractérisé en ce que l'axe de pivotement (8, 8') des bras porte-lame (9, 9') est disposé, dans la direction de traversée ou de coulissement (6) de la pièce de légume, à distance de l'arête de découpage (19, 19') de la lame de pelage (12, 12a, 12b).

3. Dispositif selon la revendication 1 ou 2, caractérisé en ce que le dispositif (1) présente plusieurs lames de pelage (12, 12a, 12b) dont au moins deux lames de pelage associées par paire sont disposées à peu près sur les faces périphériques opposées du canal de passage (4).

4. Dispositif selon l'une des revendications 1 a 3, caractérisé en ce que le dispositif (1) comporte plusieurs lames de pelage (12, 12a, 12b) ou paire de lames de pelage, disposées de façon décalée les unes par rapport aux autres dans la direction longitudinale (6) du canal de passage (4).

5. Dispositif selon l'une des revendications 1 à 4, caractérisé en ce que plusieurs lames de pelage (12, 12a, 12b) ou paire de lames de pelage sont prévues, réparties suivant des espacements réguliers sur la périphérie du canal de passage (4).

6. Dispositif selon l'une des revendications 1 à 5, caractérisé en ce qu'à chaque bras porte-lame (9) est associé au moins un ressort de rappel (24) faisant office d'élément de rappel, et en ce que ces ressorts de rappel (24) sont réalisés de préférence sous la forme de ressorts à branches.

7. Dispositif selon l'une des revendications 1 à 6, caractérisé en ce que les ressorts de rappel (24) sont maintenus préférentiellement de façon désolidarisable dans un boîtier de dispositif (2) et sollicitent le bras porte-lame (19) leur étant associé, en particulier sur le coté opposé au canal de passage (4).

8. Dispositif selon l'une des revendications 1 à 7, caractérisé en ce que les bras porte-lame (9, 9') sont susceptibles de s'écarter par pivotement à l'encontre de la force de rappel exercée par au moins un anneau en caoutchouc (16).

9. Dispositif selon l'une des revendications 1 à 8, caractérisé en ce qu'à chaque paire de lames de pelage est associé au moins un anneau en caoutchouc (16).

10. Dispositif selon l'une des revendications 1 à 9, caractérisé en ce que l'anneau en caoutchouc (16) ou les anneaux en caoutchouc (16) sont disposés sur la périphérie extérieure du boîtier de dispositif (2) et en ce que sur chaque bras porte-lame (9, 9') appuie une tige de transmission (13) sollicitée en pression par au moins un anneau en caoutchouc (16) et guidée de façon déplaçable dans le boîtier de dispositif (2), à peu près dans la direction radiale vis-à-vis du canal de passage (4).

11. Dispositif selon l'une des revendications 1 à 10, caractérisé en ce que les bras porte-lame (9, 9') sont montés de façon à pouvoir pivoter dans le boîtier de dispositif (2), en ce que l'anneau en caoutchouc (16) ou les anneaux en caoutchouc (16) sont disposés sur la périphérie extérieure du boîtier de dispositif (2) et en ce que sur chaque bras porte-lame (9, 9') appuie une tige de transmission (13) sollicitée en pression par au moins un anneau en caoutchouc (16) et guidée de façon déplaçable dans le boîtier de dispositif (2) dans une direction à peu près radiale par rapport au canal de passage (4).

12. Dispositif selon l'une des revendications 1 à 11, caractérisé en ce que le boîtier de dispositif (2) qui, de préférence, a une forme sensiblement cylindrique ou annulaire a, sur sa périphérie extérieure, au moins un point d'emprise (39) destiné à la fixation d'un support de dispositif (40) et/ou d'un autre boîtier de dispositif (2).

13. Dispositif selon l'une des revendications 1 à 12, caractérisé en ce que chaque boîtier de dispositif (2) comporte plusieurs, de préférence trois, points d'emprise (39) répartis régulièrement sur la périphérie du boîter et en ce que chaque boîtier de dispositif (2) est susceptible d'être relié de manière détachable au moyen d'une liaison avec ajustement de forme en particulier au moyen d'une liaison à rainure et languette, à au moins un autre boîtier de dispositif (2) et/ou un support de dispositif (40).

14. Dispositif selon l'une des revendications 1 à 13, caractérisé en ce que les bras porte-lame (9) présentent au moins chacun une fourche de maintien (10) agissant sur la lame de pelage (12, 12a, 12b) leur étant associée, et en ce que les deux extrémités de fourche, agissant sur la lame de pelage (12, 12a, 12b), des fourches de maintien (10) sont extensibles, de préférence élastiquement, pour effectuer l'enlèvement de la lame de pelage (12, 12a, 12b).

15. Dispositif selon l'une des revendications 1 à 14, caractérisé en ce que les bras porte-lame (9) sont fabriqués en matière plastique.

16. Dispositif selon l'une des revendications 1 à 15, caractérisé en ce que les lames de pelage (12, 12a, 12b) ont de part et d'autre des tourillons de palier (31) s'engageant dans des évidements de tourillonnement ou des ouvertures de tourillonnement (32) analogues, des fourches de maintien (10) leur étant associées.

17. Dispositif selon l'une des revendications 1 à 16, caractérisé en ce que les faces (34, 35), voisines l'une de l'autre en respectant un espacement et allant l'une vers l'autre de façon oblique en direction de la surface de contact (33), entre les tourillons de palier (31) et les ouvertures de tourillonnement (32) afférentes, des tourillons de palier (31) et des fourches de maintien (10) constituent des butées et des contre-butées coopérant ensemble, en vue de limiter les mouvements de basculement ou de pivotement des lames de pelage (12a, 12b).

18. Dispositif selon l'une des revendications 1 à 17, caractérisé en ce que les tourillons de palier (31) des lames de pelage (12a, 12b) et les faces (35), délimitant chacune une ouverture de tourillonnement (32), des fourches de retenue (10) sont arrondies dans la zone de leur surface de contact commune (33).

19. Dispositif selon l'une des revendications 1 à 18, caractérisé en ce que les lames de pelages (12, 12') sont chaque fois reliées sensiblement rigidement à au moins un palpeur supplémentaire (21, 21') qui est disposé, pour effectuer une pénétration par pivotement de la lame de pelage (12, 12') lui étant associée, depuis une position de repos en une position de découpage dans la direction de traversée ou la direction de coulissement (6), à distance de l'arête de coupe (19, 19')de la lame de pelage (12, 12') correspondante.

20. Dispositif selon l'une des revendications 1 à 19, caractérisé en ce que le centre de gravité des lames de pelage (12, 12a) est disposé au-dessus de l'axe de rotation de lame (11).

21. Dispositif selon l'une des revendications 1 à 20, caractérisé en ce qu'à chaque lame de pelage est associé au moins un ressort de rappel ou analogue, qui fait s'écarter par pivotement la lame de pelage avec son arête de découpage, à l'état de repos, vers l'extérieur.

22. Dispositif selon l'une d'une revendications 1 à 21, caractérisé en ce que les lames de pelage (12b) ont chaque fois un écarteur de pelure (36), disposé à l'arrière de leur arête de découpage (19) dans la direction de traversée ou de coulissement, écarteur de pelure dont la zone d'extrémité (37) libre, opposée à l'arête de coupe (19), est pliée obliquement vers l'extérieur ou écartée par coudage et dont la zone partielle opposée appuie du coté extérieur de préférence sur la lame de découpage (12b) et/ou se transforme en la lame de découpage (12b).

23. Dispositif selon l'une des revendications précédentes, caractérisé en ce que le centre de gravité des lames de pelage (12b) est disposé au-dessous de l'axe de rotation de lame (11).

24. Dispositif selon l'une des revendications 1 à 23, caractérisé en ce que l'espacement entre les faces, voisines les unes des autres et ayant de préférence chaque fois une forme en arc de cercle dans la zone de l'arête de découpage (19), des lames de découpage (12a, 12b) et de leur palpeur (20), va en augmentant à peu près depuis leur axe médian longitudinal (38) de part et d'autre vers l'extérieur, et en ce qu'à cette fin en particulier la forme en arc de cercle des lames de découpage (12a, 12b) a un rayon supérieur à celui des palpeurs (20).

25. Dispositif selon l'une des revendications 1 à 24, caractérisé en ce que les faces voisines les unes des autres des lames de découpage (12a, 12b) et des palpeurs (20) associés s'étendent dans leur zone de bordure extérieure à distance, de préférence parallèlement à l'axe de pivotement de lame de découpage respectif.

26. Dispositif selon l'une des revendications 1 à 25, caractérisé en ce que les palpeurs (20) reliés rigidement aux lames de pelage (12, 12a, 12b) ainsi que, le cas échéant également, les palpeurs additionnels (21) présentent une section transversale ayant à peu près une forme en segment de cercle ou bien dotée d'une courbure convexe.

27. Dispositif selon l'une des revendications 1 à 26, caractérisé en ce que le dispositif (1, 1') présente de préférence trois paires de lames de pelage (12, 12a, 12b) réparties suivant des espacements réguliers sur la périphérie du canal de passage (4) et espacés axialement les unes des autres.

28. Dispositif selon l'une des revendications 1 à 27, caractérisé en ce que la zone d'extrémité libre (20b) des palpeurs de lame de pelage (20) est chaque fois pliée vers l'extérieur, de préférence en forme d'entonnoir, à l'encontre de la direction de traversée.
